(19)

Europäisches
Patentamt
European
Patent Office
Office européen
des brevets

(11) **EP 3 151 559 A1**

(12) **EUROPEAN PATENT APPLICATION**

(43) Date of publication:
05.04.2017 Bulletin 2017/14

(51) Int Cl.:
*H04N 19/117* (2014.01)       *H04N 19/174* (2014.01)
*H04N 19/463* (2014.01)       *H04N 19/86* (2014.01)

(21) Application number: 15306535.4

(22) Date of filing: 29.09.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Thomson Licensing**
**92130 Issy-les-Moulineaux (FR)**
• **INRIA - Institut National de Recherche en Informatique et en Automatique**
**78150 Le Chesnay (FR)**

(72) Inventors:
• **ALAIN, Martin**
**35576 Cesson-Sévigné Cedex (FR)**
• **GUILLEMOT, Christine**
**35042 Rennes (FR)**
• **THOREAU, Dominique**
**35576 Cesson-Sévigné Cedex (FR)**
• **GUILLOTEL, Philippe**
**35576 Cesson-Sévigné Cedex (FR)**

(74) Representative: **Huchet, Anne**
**TECHNICOLOR**
**1-5, rue Jeanne d'Arc**
**92130 Issy-les-Moulineaux (FR)**

(54) **METHOD FOR CODING AND DECODING A PLURALITY OF PICTURE BLOCKS AND CORRESPONDING DEVICES**

(57)     A decoding method is disclosed that comprises:
- decoding (S110, S120) a plurality of picture blocks;
- clustering (S130) the plurality of decoded picture blocks into clusters;
- decoding (S140) at least one projection function for each cluster;
- applying (S150), on at least one decoded picture block, the at least one projection function associated with the cluster to which said at least one decoded picture block belongs.

FIGURE 2

**Description**

1. TECHNICAL FIELD

In the following, a method and a device for encoding picture blocks are disclosed. Corresponding decoding method and decoding device are further disclosed.

2. BACKGROUND ART

Video coding methods usually introduce artifacts on the coded/decoded signal such as quantization noise. State-of-the-art methods for removing noise are usually designed to remove white Gaussian noise. Indeed, they often make the hypothesis that the noise to remove is additive, independent and identically distributed. These methods are inefficient to remove coding noise (e.g. quantization noise) since this noise may be highly correlated to the video signal.

3. BRIEF SUMMARY

According to an aspect of the present principles, a decoding method is disclosed that comprises:

- decoding a plurality of picture blocks;
- clustering the plurality of decoded picture blocks into clusters;
- decoding at least one projection function for each cluster;
- applying, on at least one decoded picture block, the at least one projection function associated with the cluster to which the at least one decoded picture block belongs.

The present embodiments also provide a decoding device comprising a communication interface configured to access at least one bitstream and at least one processor configured to:

- decode a plurality of picture blocks from the accessed bitstream;
- cluster the plurality of decoded picture blocks into clusters;
- decode at least one projection function for each cluster;
- apply, on at least one decoded picture block, the at least one projection function associated with the cluster to which the at least one decoded picture block belongs.

The present embodiments also provide a decoding device comprising:

- means for accessing a bitstream;
- means decoding a plurality of picture blocks from the accessed bitstream;
- means for clustering the plurality of decoded picture blocks into clusters;
- means for decoding at least one projection function for each cluster;
- means for applying, on at least one decoded picture block, the at least one projection function associated with the cluster to which the at least one decoded picture block belongs.

The present embodiments also provide a computer program product comprising program code instructions to execute the following steps when this program is executed on a computer:

- decoding a plurality of picture blocks;
- clustering the plurality of decoded picture blocks into clusters;
- decoding at least one projection function for each cluster;
- applying, on at least one decoded picture block, the at least one projection function associated with the cluster to which the at least one decoded picture block belongs.

The present embodiments also provide a non-transitory computer readable medium with instructions stored therein which, upon execution, instruct at least one processor to:

- decode a plurality of picture blocks;
- cluster the plurality of decoded picture blocks into clusters;
- decode at least one projection function for each cluster;
- apply, on at least one decoded picture block, the at least one projection function associated with the cluster to which the at least one decoded picture block belongs.

Advantageously, each projection function is represented by a matrix and the projection functions are decoded using a video decoder.

Advantageously, the at least one projection function is represented by a matrix and decoding the at least one projection function comprises: decoding a quantized matrix with an entropy decoder; and inverse quantizing the quantized matrix to obtain the matrix representative of the at least one projection function.

According to an aspect of the present principles, a coding method is disclosed comprising:

- coding and decoding a plurality of picture blocks;
- clustering the plurality of decoded picture blocks into clusters;
- determining, for each cluster, at least one projection function so as to minimize an error between the source picture blocks and decoded picture blocks of the cluster processed by the at least one projection function;
- coding the at least one projection function in a stream.

The present embodiments also provide a coding device comprising a communication interface configured to access at least one picture and at least one processor configured to:

- code and decode a plurality of picture blocks of the accessed picture;
- cluster the plurality of decoded picture blocks into clusters;
- determine, for each cluster, at least one projection function so as to minimize an error between the source picture blocks and decoded picture blocks of the cluster processed by the at least one projection function;
- code the at least one projection function in a stream.

The present embodiments also provide a coding device comprising:

- means for accessing at least one picture;
- means for coding and decoding a plurality of picture blocks of the accessed picture;
- means for clustering the plurality of decoded picture blocks into clusters;
- means for determining, for each cluster, at least one projection function so as to minimize an error between the source picture blocks and decoded picture blocks of the cluster processed by the at least one projection function;
- means for coding the at least one projection function in a stream.

The present embodiments also provide a computer program product comprising program code instructions to execute the following steps when this program is executed on a computer:

- coding and decoding a plurality of picture blocks;
- clustering the plurality of decoded picture blocks into clusters;
- determining, for each cluster, at least one projection function so as to minimize an error between the source picture blocks and decoded picture blocks of the cluster processed by the at least one projection function;
- coding the at least one projection function in a stream.

The present embodiments also provide a non-transitory computer readable medium with instructions stored therein which, upon execution, instruct at least one processor to:

- code and decode a plurality of picture blocks of the accessed picture;
- cluster the plurality of decoded picture blocks into clusters;
- determine, for each cluster, at least one projection function so as to minimize an error between the source picture blocks and decoded picture blocks of the cluster processed by the at least one projection function;
- code the at least one projection function in a stream.
  Advantageously, each projection function is represented by a matrix and the projection functions are coded using a video encoder.

Advantageously, the at least one projection function is represented by a matrix and coding the at least one projection function comprises: quantizing the matrix representative of the at least one projection function; and coding the quantized matrix with an entropy coder.

The present embodiments also provide a stream or a storage medium tangibly embodying this stream, wherein the stream comprises at least:

- information representative of at least one projection function to be applied on at least one picture block; and
- information representative of the at least one picture block.

## 4. BRIEF SUMMARY OF THE DRAWINGS

- Figure 1 depicts on the left side a transmitter and on the right side a receiver according to a non-limiting embodiment;
- Figure 2 represents a flowchart of a method for decoding a stream according to a non-limiting embodiment;
- Figure 3 represents a flowchart of a method for coding plurality of picture blocks in a stream according to a non-limiting embodiment;
- Figure 4 depicts projection matrices;
- Figure 5 represents an exemplary architecture of the receiver configured to decode a plurality of picture blocks from a stream S according to a non-limiting embodiment; and
- Figure 6 represents an exemplary architecture of the transmitter configured to encode a plurality of picture blocks in a stream S according to a non-limiting embodiment.

## 5. DETAILED DESCRIPTION

In the following, the word "reconstructed" and "decoded" can be used interchangeably. It will be appreciated that the present principles are not restricted to a single picture and can be applied to a sequence of pictures such as a video.

It is to be understood that the figures and descriptions have been simplified to illustrate elements that are relevant for a clear understanding of the present principles, while eliminating, for purposes of clarity, many other elements found in typical encoding and/or decoding devices.

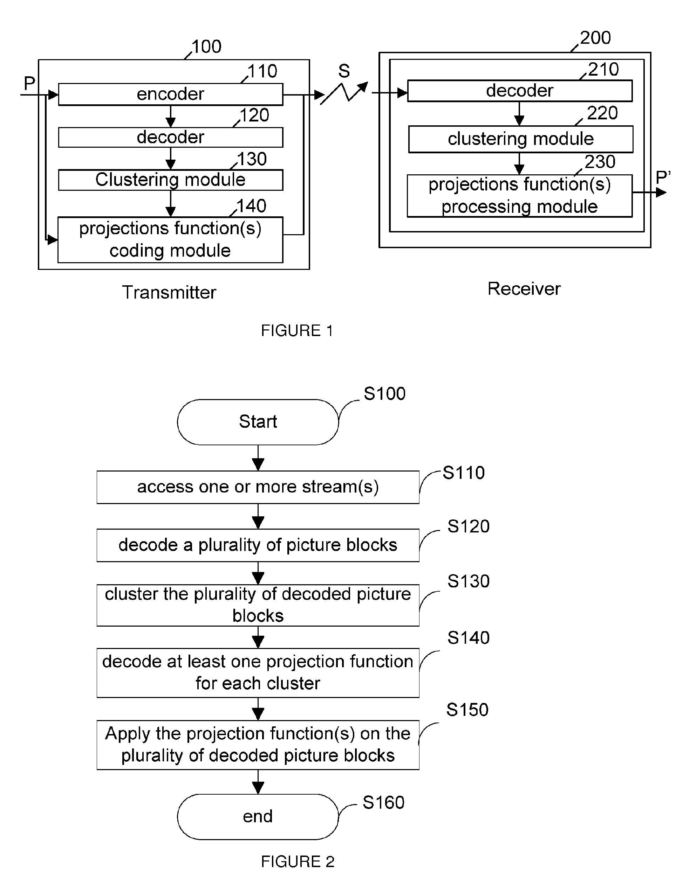

**Figure 1** depicts on the left side a transmitter 100 and on the right side a receiver 200 according to a non-limiting embodiment. The transmitter 100 receives on an input (not represented) a picture P or picture blocks of the picture P also known as source blocks. The received picture P, i.e. its picture blocks, is encoded in a stream S by an encoder 110 in the transmitter 100. The encoded picture is further decoded by a decoder 120 in the transmitter into a decoded picture formed of decoded picture blocks. The decoder 120 is connected to a module 130 in the transmitter 100 configured to cluster decoded picture block(s) of the decoded picture into K clusters, K being an integer superior or equal to 2. The picture block(s) may or may not overlap. The module 130 is connected to a module 140 in the transmitter 100 that is configured to determine, for each cluster, at least one projection function from the clustered picture blocks and the spatially corresponding picture blocks in the picture P. A projection function, or mapping function $f$, maps an input vector $x$ in a space $E$ into a vector $y$ in a space $F$. The dimension of $F$ can be different from the dimension of $E$. A projection function has a left inverse, which means that $f^{-1}(y) = f^{-1}(f(x)) = x$. In an example, the vectors are vectorized picture blocks, and the function may be represented in the form of a matrix. If $x$ is of dimension $m \times n$, and $y$ of dimension $M \times N$, then the matrix $f$ is of dimension $(M \times N) \times (m \times n)$.

The clustered picture blocks are noisy picture blocks and the picture blocks in the picture P are source blocks. The module 140 is further configured to encode the projection function(s). The projection function may be encoded in the stream S as represented in figure 1 or in another stream S' different from S (not represented).

The stream(s) (S and/or S') may be stored in a memory or transmitted via an output (not represented) of the transmitter 100 to the receiver 200. The stream(s) S is (are) received on an input (not represented) of the receiver 200 and transmitted to a decoder 210 in the receiver 200. The decoder 210 is configured to decode the stream(s). The output of the decoder 210 is decoded picture blocks and possibly the projection function(s). The decoder 210 is connected to a module 220 in the receiver configured to cluster decoded picture block(s) of the decoded picture into K clusters, K being an integer superior or equal to 2. The module 220 is connected to a module 230 in the receiver 200 configured to apply the decoded projection functions on the clustered picture block(s). Specifically, a clustered picture block is processed with at least one projection function associated with the cluster to which the clustered picture block belongs.

In a variant (not represented), the decoder 210 is not configured to decode the projection function(s) but the module 230 or another module is.

The picture P' formed by the processed picture blocks may be stored in a memory or may be transmitted via an output, e.g. to a display.

**Figure 2** represents a flowchart of a method for decoding a stream according to a non-limiting embodiment. The method starts at step S100. At step S110, the receiver 200 of Figure 1 accesses one or more stream(s)'. At step S120, the receiver decodes a plurality of picture blocks from a stream S. The picture blocks may or may not overlap. The decoded picture block(s) may belong to a single picture or a sequence of picture(s) in the case of a video. As an example the picture blocks may be decoded by an AVC or HEVC decoder. It will be appreciated that the present principles are not restricted to these decoders and any other decoder may be used, e.g. JPEG, VP9, VP10, Daala, Thor. Any decoder able to decode a plurality of picture block(s) are suitable. Decoding may comprise entropy decoding, transformation (for example with an inverse Discrete Cosine Transform), inverse quantization, prediction (for example spatial or temporal prediction) or part of these elements.

At step S130, the plurality of decoded picture blocks is clustered into K clusters, e.g. using a K-means algorithm. It will be appreciated that the present principles are not restricted to K-means algorithm and other clustering method may be used, e.g. the mean-shift algorithm or spectral clustering. At step S140, at least one projection function is decoded per cluster from the stream S or from a stream S' different from S. Decoding a projection function depends on the way the projection function is encoded. As an example, the projection function may be represented by a matrix. The matrices representing the projection functions may be decoded using an entropy decoder followed by an inverse quantization. In a variant, the projections matrices may be considered as pictures, and the stack of matrices as a video, which may be decoded using a traditional video decoder, possibly followed by inverse quantization. At step S150, the plurality of decoded picture blocks is processed by applying on each decoded picture block the projection function associated with the cluster to which the decoded picture block belongs. The steps may be applied in another order than the one indicated on figure 2. Applying such projection functions on the receiver side improves the visual quality of the decoded picture blocks and more generally of the decoded picture(s) formed by the decoded picture blocks. Method ends at step S160.

In a specific and non-limiting embodiment, a first GOP (Group Of Pictures) may be processed according to the method described with reference to figure 2 and may serve as reference for predicting the pictures of a second GOP. In such a case, the processed pictures of the first GOP are stored in the DPB (Decoded Picture Buffer).

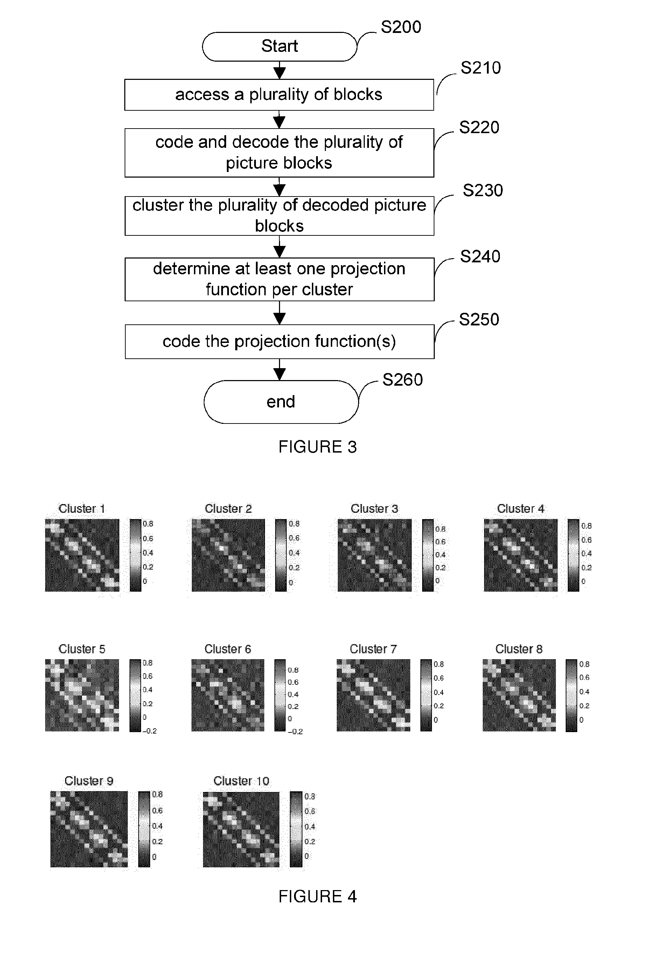

**Figure 3** represents a flowchart of a method for coding a plurality of picture blocks in a stream S according to a non-limiting embodiment.

The method starts at step S200. At step S210, the transmitter 100 of Figure 1 accesses a plurality of picture blocks, also referred to as source blocks. The plurality of picture blocks may belong to a single picture or to a sequence of pictures in the case of a video. The picture blocks may or may not overlap. At step S220, the plurality of picture blocks is coded in a stream. They are further decoded into reconstructed blocks that may serve for prediction of other picture blocks. As an example the picture blocks may be encoded by an AVC or HEVC encoder. It will be appreciated that the present principles are not restricted to these encoders and any other encoder may be used, e.g. JPEG, VP9, VP10, Daala, Thor. Any encoder able to encode a plurality of picture block(s) are suitable. Encoding may comprise prediction (for example spatial or temporal prediction), transformation (for example Discrete Cosine Transform), quantization, entropy coding or part of these elements.

On the encoder side, decoding may comprise entropy decoding, transform (for example inverse Discrete Cosine Transform), inverse quantization, prediction (for example spatial or temporal prediction) or part of these elements. As an example, entropy decoding is often avoided on the encoder side.

At step S230, the plurality of decoded/reconstructed picture blocks is clustered into K clusters, e.g. using the K-means algorithm. It will be appreciated that the present principles are not restricted to K-means algorithm and other clustering method may be used, e.g. the mean-shift algorithm or spectral clustering. This step may be identical to step S130. At step S240, the transmitter determines at least one projection function per cluster. As an example, for each cluster, a projection function is determined using multivariate linear regression between the coded/decoded picture blocks and the corresponding source picture blocks. The projection function F for a cluster is determined by minimizing E:

$$E = \|M_s - M_n^T F^T\|^2 \qquad \text{Equation 1}$$

where $M_s$ is a matrix containing the vectorized source picture blocks of the cluster, and $M_n$ a matrix containing the corresponding vectorized noisy picture blocks, i.e. the coded/decoded picture blocks. The above equation is of the form $\|Y - XB\|^2$ (corresponding to the linear regression model $Y = XB + E$). The minimization of Equation 1 gives the following least square estimator:

$$F = M_s M_n^T (M_n M_n^T)^{-1}$$

F is a projection function represented by a matrix of size $(M * N) \times (M * N)$, where M and N are the height and width of the picture block respectively.

The transmitter may loop over individual clusters in order to determine all the projection functions. Determining such projection functions makes it possible to take into account correlation between coding noise and the signal to be coded, i.e. the picture blocks. Applying such projection functions on the receiver side improves the visual quality of the decoded picture blocks and more generally of the decoded picture(s) formed by the decoded picture blocks.

At step S250, the transmitter encodes the projection function(s) in a stream which may be the stream S or another stream different from S. As an example, raw matrices are determined at step S240 using floating point values, and each value is coded on 32 bits. Such matrices are represented on **Figure 4** (with $K$ = 10).

The matrices may be quantized on $n$ bits integer values, with $n$ < 32, e.g., $n$ = 16,12,10,8. The original minimum and maximum values of the matrices may be sent to the receiver so that the inverse quantization of the matrices may be performed.

The matrices may be more compressed using an entropy coder, such as the Huffman encoder. At the decoder side, the matrices are decoded using an entropy decoder, and the matrices are then obtained by inversing the quantization.

As it can be seen in Figure 4, the different matrices are correlated. Therefore, the projections matrices may be considered as pictures, and the stack of matrices as a video, which may then be coded using a traditional video coder. Since traditional video codecs usually have a limited bit depth, e.g. 8, 10, 12 or 16, the matrices may be quantized as described above before being encoded. In a specific and non-limiting embodiment, a first coded and reconstructed GOP (Group Of Pictures), more specifically the picture blocks of this first GOP, may be processed with the projection functions determined at step S240. Processing a reconstructed picture block is similar to the step S150 of the decoding method. The reconstructed blocks are processed by applying on each reconstructed picture block the projection function associated with the cluster to which the reconstructed picture block belongs. The processed picture blocks may then serve as reference for predicting blocks of a second GOP. In such a case, the processed blocks of the first GOP are stored in the DPB (Decoded Picture Buffer). The processing with the projection is thus part of the encoding loop. On the figures 2 and 3, the boxes are functional units, which may or not be in relation with distinguishable physical units. For example, these modules or some of them may be brought together in a unique component or circuit, or contribute to functionalities of a software. *A contrario,* some modules may be composed of separate physical entities, i.e. processors, circuits, memories, dedicated hardware such ASIC or FPGA or VLSI, respectively « Application Specific Integrated Circuit », « Field-Programmable Gate Array », « Very Large Scale Integration », etc.

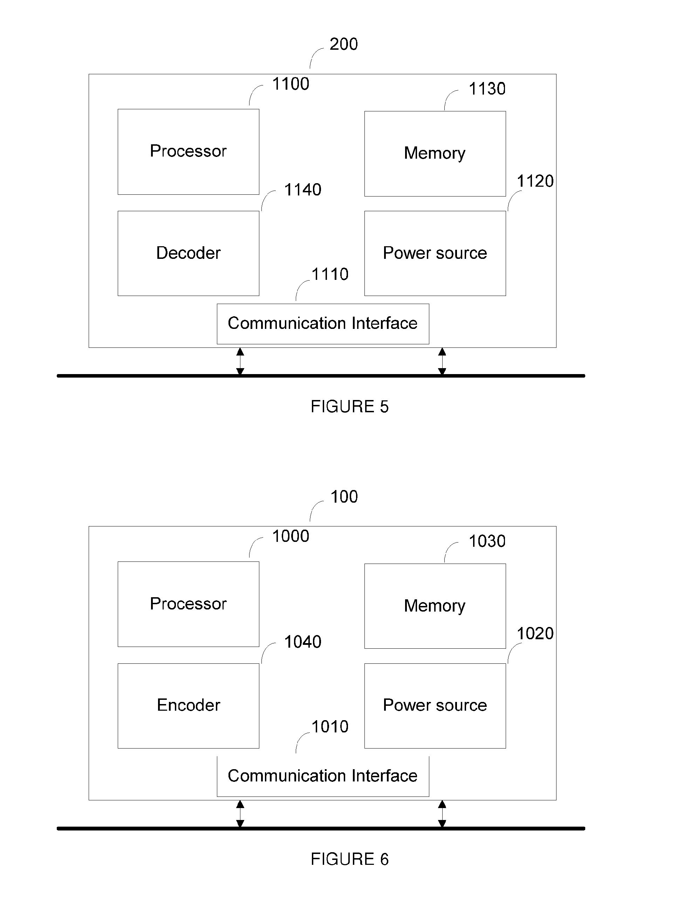

**Figure 5** represents an exemplary architecture of the receiver 200 of figure 1 configured to decode a plurality of picture blocks from at least one stream S according to a non-limiting embodiment.

The receiver 200 comprises one or more processor(s) 1100, which may comprise, for example, a CPU, a GPU and/or a DSP (English acronym of Digital Signal Processor), along with internal memory 1130 (e.g. RAM, ROM and/or EPROM). The receiver 200 comprises one or more communication interface(s) 1110, each adapted to display output information and/or allow a user to enter commands and/or data (e.g. a keyboard, a mouse, a touchpad, a webcam); and a power source 1120 which may be external to the receiver 200. The receiver 200 may also comprise one or more network interface(s) (not shown). Decoder module 1140 represents the module that may be included in a device to perform the decoding functions. Additionally, decoder module 1140 may be implemented as a separate element of the receiver 200 or may be incorporated within processor(s) 1100 as a combination of hardware and software as known to those skilled in the art.

The stream(s) S and possibly S' may be obtained from one or more source(s). According to different embodiments, the source may be, but not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

According to different embodiments, the decoded picture blocks processed by the projection functions (or the decoded picture formed of these blocks) may be sent to a destination, e.g. a display device. As an example, the decoded picture blocks processed by the projection functions (or the decoded picture formed of these blocks) are stored in a remote or in a local memory, e.g. a video memory or a RAM, a hard disk. In a variant, the decoded picture blocks processed by the projection functions (or the decoded picture formed of the these blocks) are sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the receiver 200 further comprises a computer program stored in the memory 1130. The computer program comprises instructions which, when executed by the receiver 200, in particular by the processor 1100, enable the receiver to execute the method described with reference to figure 2. According to a variant, the computer program is stored externally to the receiver 200 on a non-transitory digital data support, e.g. on an external storage medium such as a HDD, CD-ROM, DVD, a read-only and/or DVD drive and/or a DVD Read/Write drive, all known in the art. The receiver 200 thus comprises a mechanism to read the computer program. Further, the receiver 200 may access one or more Universal Serial Bus (USB)-type storage devices (e.g., "memory sticks.") through corresponding USB ports (not shown).

According to exemplary and non-limiting embodiments, the receiver 200 can be, but not limited to:

- a mobile device ;
- a communication device ;
- a game device ;
- a set top box;
- a TV set;
- a tablet (or tablet computer) ;
- a laptop ;
- a display and
- a decoding chip.

**Figure 6** represents an exemplary architecture of the transmitter 100 of figure 1 configured to encode a plurality of picture blocks in at least one stream S according to a non-limiting embodiment.

The transmitter 100 comprises one or more processor(s) 1000, which may comprise, for example, a CPU, a GPU and/or a DSP (English acronym of Digital Signal Processor), along with internal memory 1030 (e.g. RAM, ROM, and/or EPROM). The transmitter 100 comprises one or more communication interface(s) 1010, each adapted to display output information and/or allow a user to enter commands and/or data (e.g. a keyboard, a mouse, a touchpad, a webcam); and a power source 1020 which may be external to the transmitter 100. The transmitter 100 may also comprise one or more network interface(s) (not shown). Encoder module 1040 represents the module that may be included in a device to perform the coding functions. Additionally, encoder module 1040 may be implemented as a separate element of the transmitter 100 or may be incorporated within processor(s) 1000 as a combination of hardware and software as known to those skilled in the art.

The plurality of picture blocks may be obtained from a source. According to different embodiments, the source may be, but is not limited to:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

According to different embodiments, the stream(s) (stream S and possibly S') may be sent to a destination. As an example, the stream(s) is(are) stored in a remote or in a local memory, e.g. a video memory or a RAM, a hard disk. In a variant, the stream(s) is(are) sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limiting embodiment, the transmitter 100 further comprises a computer program stored in the memory 1030. The computer program comprises instructions which, when executed by the transmitter 100, in particular by the processor 1000, enable the transmitter 100 to execute the method described with reference to figure 3. According to a variant, the computer program is stored externally to the transmitter 100 on a non-transitory digital data support, e.g. on an external storage medium such as a HDD, CD-ROM, DVD, a read-only and/or DVD drive and/or a DVD Read/Write drive, all known in the art. The transmitter 100 thus comprises a mechanism to read the computer program. Further, the transmitter 100 could access one or more Universal Serial Bus (USB)-type storage devices (e.g., "memory sticks.") through corresponding USB ports (not shown).

According to exemplary and non-limiting embodiments, the transmitter 100 can be, but is not limited to:

- a mobile device ;
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

**EP 3 151 559 A1**

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A decoding method comprising:

   - decoding (S110, S120) a plurality of picture blocks;
   - clustering (S130) the plurality of decoded picture blocks into clusters;
   - decoding (S140) at least one projection function for each cluster;
   - applying (S150), on at least one decoded picture block, the at least one projection function associated with the cluster to which said at least one decoded picture block belongs.

2. The method of claim 1, wherein each projection function being represented by a matrix, said projection functions are decoded using a video decoder.

3. The method of claim 1, wherein said at least one projection function being represented by a matrix, decoding said at least one projection function comprises:

8

decoding a quantized matrix with an entropy decoder; and
inverse quantizing the quantized matrix to obtain said matrix representative of the at least one projection function.

4. A coding method comprising:

- coding and decoding (S210, S220) a plurality of picture blocks;
- clustering (S230) the plurality of decoded picture blocks into clusters;
- determining, for each cluster, (S240) at least one projection function so as to minimize an error between the source picture blocks and decoded picture blocks of said cluster processed by said at least one projection function;
- coding (S250) said at least one projection function in a stream.

5. The method of claim 4, wherein each projection function being represented by a matrix, said projection functions are coded using a video encoder.

6. The method of claim 4, wherein said at least one projection function being represented by a matrix, coding said at least one projection function comprises:

quantizing the matrix representative of said at least one projection function;
and
coding the quantized matrix with an entropy coder.

7. A decoding device comprising:

- means for accessing a bitstream;
- means decoding a plurality of picture blocks from said accessed bitstream;
- means for clustering the plurality of decoded picture blocks into clusters;
- means for decoding at least one projection function for each cluster;
- means for applying, on at least one decoded picture block, the at least one projection function associated with the cluster to which said at least one decoded picture block belongs.

8. The decoding device according to claim 7, wherein said device is configured to execute the steps of the decoding method according to any of claims 1 to 3.

9. A coding device comprising:

- means for accessing a picture;
- means for coding and decoding a plurality of picture blocks of said accessed picture;
- means for clustering the plurality of decoded picture blocks into clusters;
- means for determining, for each cluster, at least one projection function so as to minimize an error between the source picture blocks and decoded picture blocks of said cluster processed by said at least one projection function;
- means for coding said at least one projection function in a stream.

10. The coding device according to claim 9, wherein said device is configured to execute the steps of the decoding method according to any of claims 4 to 6.

11. A computer program product comprising program code instructions to execute the following steps when this program is executed on a computer:

- decoding a plurality of picture blocks;
- clustering the plurality of decoded picture blocks into clusters;
- decoding at least one projection function for each cluster;
- applying, on at least one decoded picture block, the at least one projection function associated with the cluster to which said at least one decoded picture block belongs.

12. A computer program product comprising program code instructions to execute the following steps when this program is executed on a computer:

- coding and decoding a plurality of picture blocks;
- clustering the plurality of decoded picture blocks into clusters;
- determining, for each cluster, at least one projection function so as to minimize an error between the source picture blocks and decoded picture blocks of said cluster processed by said at least one projection function;
- coding said at least one projection function in a stream.

Transmitter

Receiver

FIGURE 1

FIGURE 2

FIGURE 3

FIGURE 4

200

1100

Processor

1130

Memory

1140

Decoder

1120

Power source

1110

Communication Interface

FIGURE 5

100

1000

Processor

1030

Memory

1040

Encoder

1020

Power source

1010

Communication Interface

FIGURE 6

# EP 3 151 559 A1

Europäisches
Patentamt

European
Patent Office

Office européen
des brevets

## EUROPEAN SEARCH REPORT

Application Number

EP 15 30 6535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/091521 A2 (THOMSON LICENSING [FR]) 23 July 2009 (2009-07-23) * claims 1, 4, 13; figures 11, 17 * | 1-12 | INV. H04N19/117 H04N19/174 H04N19/463 H04N19/86 |
| X | EP 1 944 974 A1 (MATSUSHITA ELECTRIC IND CO LTD [JP]) 16 July 2008 (2008-07-16) * paragraphs [0076], [0077]; figure 5 * | 1-12 | |
| X | US 2003/053711 A1 (KIM CHANGICK [US]) 20 March 2003 (2003-03-20) * abstract; figure 1 * | 1-12 | |
| X | WO 2009/088340 A1 (ERICSSON TELEFON AB L M [SE]) 16 July 2009 (2009-07-16) * paragraph [0003]; figure 2b * | 1-12 | |
| X | WO 2010/104570 A1 (THOMSON LICENSING [FR]) 16 September 2010 (2010-09-16) * figures 2-5 * | 1-12 | |
| X | EP 2 525 576 A1 (SHARP KK [JP]) 21 November 2012 (2012-11-21) * claim 4; figures 3, 13 * | 1-12 | TECHNICAL FIELDS SEARCHED (IPC) H04N |
| X | EP 2 887 672 A1 (THOMSON LICENSING [FR]) 24 June 2015 (2015-06-24) * claim 7; figures 5, 7A, * | 1,4,7-12 | |

-/--

| | | |
|---|---|---|
| The present search report has been drawn up for all claims | | |
| Place of search | Date of completion of the search | Examiner |
| Munich | 9 March 2016 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 6535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AN-CHAO TSAI ET AL: "Classified Multifilter Up-Sampling Algorithm in Spatial Scalability for H.264/SVC Encoder", IEEE TRANSACTIONS ON CIRCUITS AND SYSTEMS FOR VIDEO TECHNOLOGY, IEEE SERVICE CENTER, PISCATAWAY, NJ, US, vol. 20, no. 6, 1 June 2010 (2010-06-01), pages 861-869, XP011305226, ISSN: 1051-8215 * abstract; figures 1, 3 * ----- | 1-12 | |
| A | US 2013/031063 A1 (FRERIS NIKOLAOS [CH] ET AL) 31 January 2013 (2013-01-31) * abstract * ----- | 1-12 | |

TECHNICAL FIELDS SEARCHED (IPC)

The present search report has been drawn up for all claims

| Place of search | Date of completion of the search | Examiner |
|---|---|---|
| Munich | 9 March 2016 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6535

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2016

| Patent document cited in search report | | Publication date | Patent family member(s) | | Publication date |
|---|---|---|---|---|---|
| WO 2009091521 | A2 | 23-07-2009 | BR | PI0906481 A2 | 14-07-2015 |
| | | | CN | 101911704 A | 08-12-2010 |
| | | | EP | 2229782 A2 | 22-09-2010 |
| | | | JP | 5357898 B2 | 04-12-2013 |
| | | | JP | 2011510561 A | 31-03-2011 |
| | | | JP | 2013258765 A | 26-12-2013 |
| | | | KR | 20100103822 A | 28-09-2010 |
| | | | US | 2010272191 A1 | 28-10-2010 |
| | | | WO | 2009091521 A2 | 23-07-2009 |
| EP 1944974 | A1 | 16-07-2008 | EP | 1944974 A1 | 16-07-2008 |
| | | | EP | 2104355 A1 | 23-09-2009 |
| | | | US | 2010021071 A1 | 28-01-2010 |
| | | | WO | 2008084745 A1 | 17-07-2008 |
| US 2003053711 | A1 | 20-03-2003 | NONE | | |
| WO 2009088340 | A1 | 16-07-2009 | CN | 101939993 A | 05-01-2011 |
| | | | CN | 101971632 A | 09-02-2011 |
| | | | EP | 2227909 A1 | 15-09-2010 |
| | | | EP | 2232874 A1 | 29-09-2010 |
| | | | EP | 2241112 A1 | 20-10-2010 |
| | | | JP | 5236746 B2 | 17-07-2013 |
| | | | JP | 2011509594 A | 24-03-2011 |
| | | | US | 2010278269 A1 | 04-11-2010 |
| | | | US | 2010284458 A1 | 11-11-2010 |
| | | | US | 2010284461 A1 | 11-11-2010 |
| | | | WO | 2009087095 A1 | 16-07-2009 |
| | | | WO | 2009088340 A1 | 16-07-2009 |
| | | | WO | 2009088353 A1 | 16-07-2009 |
| WO 2010104570 | A1 | 16-09-2010 | CN | 102349298 A | 08-02-2012 |
| | | | EP | 2406957 A1 | 18-01-2012 |
| | | | JP | 2012520607 A | 06-09-2012 |
| | | | JP | 2015146643 A | 13-08-2015 |
| | | | KR | 20110126693 A | 23-11-2011 |
| | | | US | 2012002722 A1 | 05-01-2012 |
| | | | WO | 2010104570 A1 | 16-09-2010 |
| EP 2525576 | A1 | 21-11-2012 | CN | 102714732 A | 03-10-2012 |
| | | | EP | 2525576 A1 | 21-11-2012 |
| | | | US | 2012300849 A1 | 29-11-2012 |
| | | | WO | 2011086836 A1 | 21-07-2011 |
| EP 2887672 | A1 | 24-06-2015 | EP | 2887672 A1 | 24-06-2015 |
| | | | WO | 2015091360 A1 | 25-06-2015 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 15 30 6535

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2016

| Patent document cited in search report | Publication date | Patent family member(s) | Publication date |
|---|---|---|---|
| US 2013031063    A1 | 31-01-2013 | NONE | |

EPO FORM P0459

For more details about this annex : see Official Journal of the European Patent Office, No. 12/82